# DEMANDE DE BREVET EUROPEEN

(11) **EP 1 964 721 A1**
(43) Date de publication de la demande: **03.09.2008**
(21) Numéro de dépôt: 08151959.7
(22) Date de dépôt: 26.02.2008
(51) Int. Cl.: B60R 5/04

(54) **Tablette pliable pour vehicule automobile**

(30) Priorité: 02.03.2007 FR 0753618
(71) Demandeur: PEUGEOT CITROËN AUTOMOBILES S.A., 78140 Vélizy Villacoublay (FR)
(72) Inventeur: Le Dall, Christophe, 92150 Suresnes (FR); Duvivier Arnaud, 91120 Palaiseau (FR); Bouchard, Thierry, 98000 Monaco (MC); Morando, Patrick, 98000 Monaco (MC)
(74) Mandataire: Vigand, Régis Louis Michel

(57) **Abrégé**

L'invention concerne une tablette pliable pour véhicule automobile comprenant au moins une articulation longitudinale (5, 6) pour permettre l'accès au volume (2) situé sous ladite tablette, et au moins une articulation transversale (7, 8) permettant le fractionnement dudit volume (2), caractérisée en ce qu'elle comprend des moyens de verrouillage (11) de ladite articulation transversale pour permettre sélectivement d'associer les parties de la tablette (1) séparées par ladite articulation transversale.

L'invention concerne également un véhicule automobile comprenant une telle tablette (1).

## Description

L'invention concerne une tablette pliable pour véhicule automobile, du type comprenant au moins une articulation longitudinale pour permettre l'accès au volume situé sous ladite tablette, et au moins une articulation transversale permettant le fractionnement dudit volume, ainsi qu'un véhicule automobile comprenant une telle tablette pliable.

Les véhicules automobiles proposent toujours plus de configurations intérieures possibles pour, par exemple, dégager des espaces de rangement supplémentaires ou augmenter le nombre de places assises. Ainsi, de plus en plus de véhicules proposent une troisième rangée de sièges indépendants qui est généralement située dans le coffre.

Cette troisième rangée est le plus souvent constituée de sièges escamotables qui, lorsqu'ils sont utilisés, s'approprient le volume du coffre. Par conséquent, la plage arrière, appelée également cache-bagages, n'est plus utilisable lorsqu'au moins un des sièges est installé. Il n'est alors plus possible de dissimuler des bagages dans le coffre.

Pour remédier à cet inconvénient, il a été proposé des tablettes pliables faisant office de plage arrière et permettant de fractionner le volume du coffre. Le document FR-A-2 861 029 décrit par exemple une telle tablette pliable, qui est du type précité. L'articulation transversale permet de plier une partie de la tablette de sorte que cette partie ne recouvre plus une partie du volume formé par le coffre. On peut alors disposer de l'espace dégagé pour placer par exemple un siège. L'autre partie de la tablette couvre toujours une autre partie du volume, et l'on peut disposer des objets dans ce volume sans qu'ils soient visibles depuis l'extérieur du véhicule.

Cependant, la tablette décrite ci-dessus ne permet pas d'accéder facilement au volume couvert par la tablette pliable depuis les sièges arrière du véhicule. En effet, l'utilisateur ne peut que soulever l'intégralité de la partie avant de la tablette lorsque celle-ci est complètement déployée, ce qui est peu pratique. De plus, cette fonctionnalité est perdue lorsque la tablette est pliée pour ne recouvrir qu'une partie du coffre.

L'invention vise à pallier cet inconvénient en permettant un soulèvement d'une partie de la longueur de la tablette.

A cet effet, l'invention concerne une tablette pliable pour véhicule automobile du type précité, caractérisée en ce qu'elle comprend des moyens de verrouillage de ladite articulation transversale pour permettre sélectivement d'associer les parties de la tablette séparées par ladite articulation transversale.

Selon d'autres caractéristiques de l'invention :
- chaque articulation transversale est interrompue par chaque articulation longitudinale, les moyens de verrouillage permettant de sélectivement verrouiller au moins une partie de ladite articulation transversale ;
- l'articulation transversale est formée par des pièces saillantes selon la direction longitudinale des parties de la tablette séparées par l'articulation transversale, les pièces d'une desdites parties coopérant avec des pièces complémentaires de l'autre partie pour former l'articulation ;
- les moyens de verrouillage comprennent un bouton poussoir mobile entre une position de verrouillage, dans laquelle le bouton engage un axe entre deux pièces appartenant respectivement aux parties de la tablette séparées par l'articulation transversale, et une position de déverrouillage, dans laquelle le bouton désengage ledit axe ; et
- la tablette pliable comprend au moins une tablette latérale, articulée sur au moins une partie de la tablette pliable pour permettre de combler au moins un espace non recouvert par le reste de la tablette.

L'invention concerne également un véhicule automobile comprenant une tablette pliable telle que décrite ci-dessus.

D'autres aspects et avantages de l'invention apparaîtront au cours de la description qui suit, donnée à titre d'exemple et faite en référence aux dessins annexés, sur lesquels :
- la Fig. 1 est une vue schématique en perspective de la tablette selon l'invention en position dépliée;
- la Fig. 2 est une vue schématique en perspective de la tablette selon l'invention en position pliée ;
- la Fig. 3 est une vue schématique en perspective de la tablette selon l'invention, une partie avant de la tablette étant relevée ;
- la Fig. 4 est une vue en coupe de la tablette selon l'axe IV-IV de la Fig. 1, l'articulation transversale étant déverrouillée ;
- la Fig. 5 est une vue en coupe similaire à le Fig. 4, l'articulation transversale étant verrouillée ;
- la Fig. 6 est une vue en perspective de la tablette selon l'invention pliée pour son rangement.

Dans la description, on définit le terme « longitudinal » selon la direction de la plus grande dimension de la tablette et le terme « transversal » selon la direction de la plus petite dimension de la tablette.

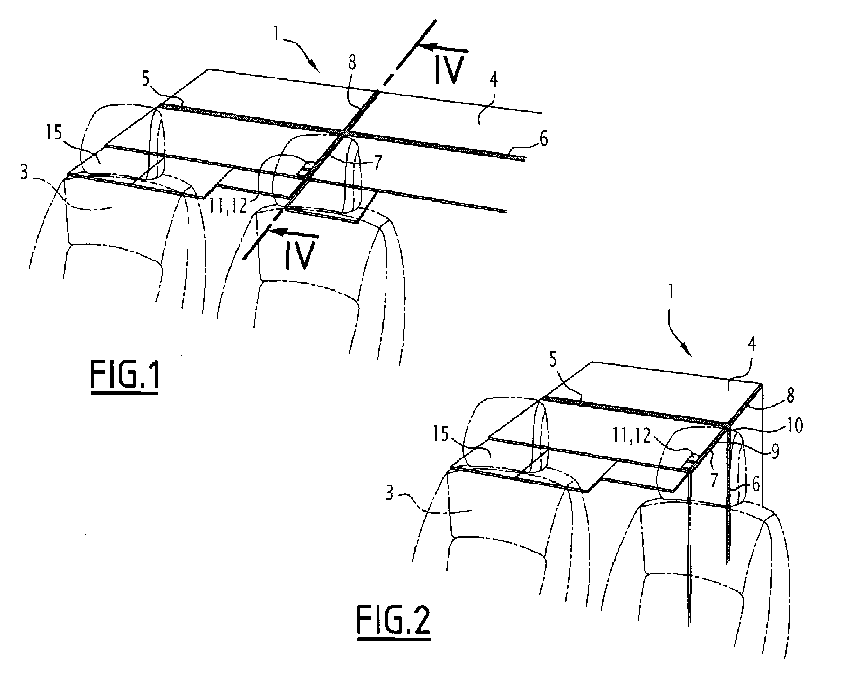

La tablette pliable 1 selon l'invention est destinée à recouvrir un volume 2 formant par exemple le coffre d'un véhicule automobile (non représenté). Lorsqu'elle est dépliée, comme représenté sur la Fig. 1, la tablette 1 peut s'étendre à partir des sièges arrière 3 du véhicule automobile jusqu'à l'ouvrant arrière (non représenté) et couvre tout la largeur du véhicule en position dépliée. La fonction de cette tablette 1 est de ne pas porter à la vue de personnes malveillantes d'éventuels objets présents dans le coffre, et également de pouvoir poser des objets par-dessus.

Selon l'exemple de réalisation représentée sur les figures, la tablette pliable 1 comprend une partie centrale 4 divisée en quatre parties séparées par des articulations longitudinale 5, 6 et transversale 7, 8. L'articulation longitudinale 5, 6 s'étend parallèlement à la longueur de la tablette 1. L'articulation transversale 7, 8 s'étend parallèlement à la largeur de cette tablette 1. Les articulations 5, 6 et 7, 8 se croisent en leur milieu. L'actionnement de l'articulation transversale 7, 8 permet de plier la tablette 1 de sorte à dégager une partie du volume 2, comme représenté sur la Fig. 2. L'espace dégagé permet par exemple de loger un siège supplémentaire (non représenté) dans l'espace du coffre du véhicule automobile. L'articulation longitudinale 5, 6 permet de soulever une partie de la tablette 1 pour accéder au volume du coffre, par exemple depuis l'ouvrant arrière ou depuis un siège arrière 3.

L'articulation longitudinale 5, 6 peut être formée par un amincissement de matière de la tablette 1, créant une zone de faiblesse apte à se déformer élastiquement.

Chaque moitié 7, 8 de l'articulation transversale est formée par des pièces complémentaires 9, 10 saillant longitudinalement des parties de la tablette 1. Une pièce 9 d'une partie de la tablette 1 est intercalée entre deux pièces complémentaires 10 pour former les demi-articulations 7 et 8, comme représenté sur la Fig. 2. Incidemment, ces pièces de la première partie coopèrent à glissement avec respectivement une pièce complémentaire 10 et deux pièces 9 de l'autre partie afin de former les autres demi-articulations.

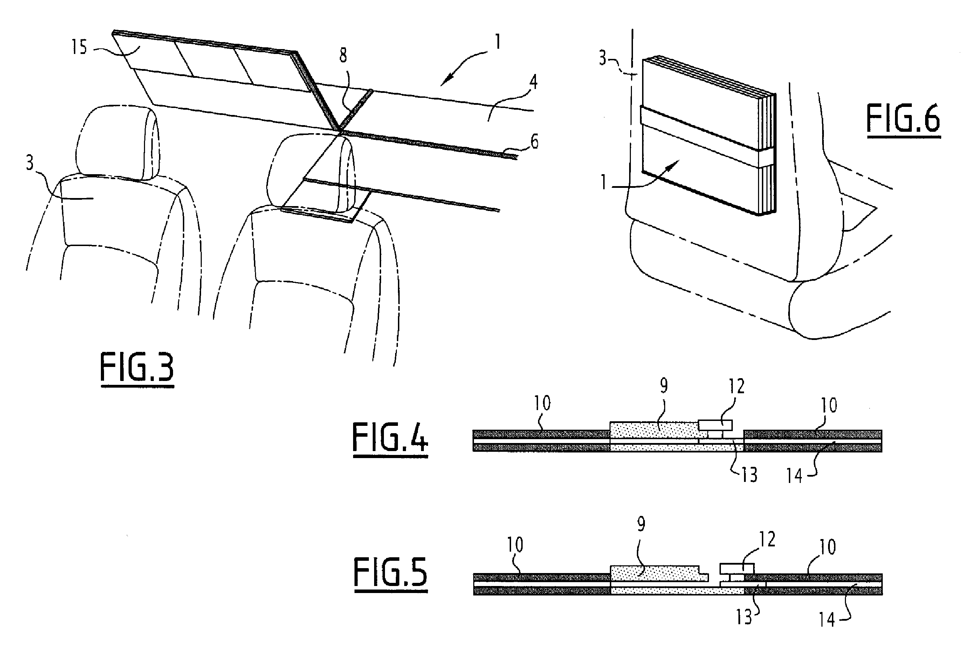

La tablette 1 comprend des moyens de verrouillage 11 d'au moins une des moitié d'articulations transversales 7 et 8. Selon la réalisation représentée sur les figures, ces moyens 11 permettent de verrouiller ou déverrouiller l'articulation transversale avant 7, c'est-à-dire celle qui est disposée le plus près des sièges arrière 3. Les moyens de verrouillage 11 comprennent un bouton poussoir 12 mobile entre une position de verrouillage, représentée sur la Fig. 5, et une position de déverrouillage, représentée sur la Fig. 4. Le bouton 12 est monté mobile selon la direction transversale le long de l'articulation 7, 8. Le déplacement du bouton 12 entraîne le déplacement d'un axe 13, qui pénètre dans un alésage 14 d'un des ensembles pièce 9 - pièce complémentaire 10 dans la position de verrouillage. Ainsi en position de verrouillage, les parties séparées par l'articulation transversale avant 7 sont associées l'une à l'autre de façon articulée.

En position de déverrouillage, l'axe 13 est sorti de l'alésage 14, de sorte que les parties séparées par l'articulation transversale avant 7 sont désolidarisées. Dans cette position représentée sur la Fig. 3, un quart de la tablette peut donc être plié selon l'articulation longitudinale 5 ou 6, ce qui permet d'accéder de façon simple au volume recouvert 2 par la tablette 1 depuis les sièges arrière 3 du véhicule.

Selon des variantes de réalisation, la tablette 1 peut comporter un plus grand nombre d'articulations longitudinales et/ou transversales partielles divisant la partie centrale 4 en un plus grand nombre de parties. On se référera par exemple au document FR-A-2 861 029 montrant de telles variantes.

Selon des variantes de réalisation, la tablette 1 peut comprendre des moyens de verrouillage 11 de plusieurs articulations transversales partielles, alors que, dans l'exemple décrit ci-dessus, les pièces de l'articulation 8 sont reliées par un axe fixe.

Les moyens de verrouillage 11 permettent de replier de façon efficace la tablette 1 dans une position de rangement. En effet, en déverrouillant l'articulation transversale avant 7, les parties avant de la tablette 1 peuvent être repliées sur les parties arrière au moyen de l'articulation longitudinale 5, 6. L'articulation transversale 8 permet ensuite de plier les parties arrière de la tablette 1 l'une sur l'autre. La tablette 1 pliée peut par exemple être rangée derrière un siège 3, comme représenté sur la Fig. 6 ou sur une des parois du coffre.

La tablette 1 peut comprendre au moins une tablette latérale 15, articulée sur au moins une partie de la partie centrale 4 de la tablette pliable 1. Cette tablette latérale 15 permet de combler au moins un espace non recouvert par le reste de la tablette 1. La tablette latérale 15 peut en outre servir de moyens de fixation de la tablette 1 sur le cadre du volume 2. Les tablettes 15 représentées sur les Figs. 1 et 2 servent ainsi de moyens de fixation aux sièges arrière 3. Les tablettes latérales 15 peuvent être repliées sous la partie centrale 4 de la tablette 1, comme représenté sur la Fig. 3. D'autres tablettes auxiliaires peuvent prolonger la partie centrale 4 selon la direction longitudinale et servir de moyens de fixation sur le sol du volume 2 lorsque la tablette 1 est pliée. On se réfèrera au document FR-A-2 861 029 montrant de telles tablettes auxiliaires.

## Revendications

1. Tablette pliable (1) pour véhicule automobile, du type comprenant au moins une articulation longitudinale (5, 6) pour permettre l'accès au volume (2) situé sous ladite tablette, et au moins une articulation transversale (7, 8) permettant le fractionnement dudit volume (2), **caractérisée en ce qu'**elle comprend des moyens de verrouillage (11) de ladite articulation transversale pour permettre sélectivement d'associer les parties de la tablette (1) séparées par ladite articulation transversale.

2. Tablette pliable (1) selon la revendication 1, **caractérisée en ce que** chaque articulation transversale (7, 8) est interrompue par chaque articulation longitudinale (5, 6), les moyens de verrouillage (11) permettant de sélectivement verrouiller au moins une partie (7, 8) de ladite articulation transversale.

3. Tablette pliable (1) selon la revendication 1 ou 2, **caractérisée en ce que** l'articulation transversale (7, 8) est formée par des pièces (9, 10) saillantes selon la direction longitudinale des parties de la tablette (1) séparées par l'articulation transversale (7, 8), les pièces (9, 10) d'une desdites parties coopérant avec des pièces complémentaires (10, 9) de l'autre partie pour former l'articulation (7, 8).

4. Tablette pliable (1) selon la revendication 3, **caractérisé en ce que** les moyens de verrouillage (11) comprennent un bouton poussoir (12) mobile entre une position de verrouillage, dans laquelle le bouton (12) engage un axe (13) entre deux pièces (9, 10) appartenant respectivement aux parties de la tablette (1) séparées par l'articulation transversale (7, 8), et une position de déverrouillage, dans laquelle le bouton (12) désengage ledit axe (13).

5. Tablette pliable (1) selon l'une des revendications 1 à 4, **caractérisé en ce qu'**elle comprend au moins une tablette latérale (15), articulée sur au moins une partie de la tablette pliable (1) pour permettre de combler au moins un espace non recouvert par le reste de la tablette (1).

6. Véhicule automobile, **caractérisé en ce qu'**il comprend une tablette pliable (1) selon l'une quelconque des revendications précédentes.
